# EUROPÄISCHE PATENTSCHRIFT

(11) **EP 0 548 627 B1**
(45) Veröffentlichungstag und Bekanntmachung des Hinweises auf die Patenterteilung: **10.05.1995**
(21) Anmeldenummer: 92120708.0
(22) Anmeldetag: 04.12.1992
(51) Int. Cl.: F16F 9/04

(54) **Verfahren und Vorrichtung zur dichten Befestigung eines Schlauchstückes aus elastomerem Werkstoff an einem Anschlussteil**
Method and apparatus for the sealed mounting of a piece of hose made of elastomeric material on a connecting member
Procédé et appareil pour le fixation étanche d'une pièce de tuyaux en matière élastomérique sur un connecteur

(30) Priorität: 21.12.1991 DE 4142725
(43) Veröffentlichungstag der Anmeldung: 30.06.1993
(73) Patentinhaber: Continental Aktiengesellschaft, 30165 Hannover (DE)
(72) Erfinder: Schlei, Günter, W-3000 Hannover 91 (DE); Thurow, Gerhard, W-3008 Garbsen 1 (DE)

(56) Entgegenhaltungen:
- EP-A- 0 207 877
- EP-A- 0 319 448
- FR-A- 1 563 169
- GB-A- 844 888
- US-A- 3 093 182
- US-A- 4 854 031

## Beschreibung

Die Erfindung betrifft ein Verfahren zur dichten Befestigung eines Schlauchstückes aus elastomerem Werkstoff, insbesondere von Schlauchrollbälgen für Luftfedern, an einem Anschlußteil gemäß den Merkmalen im Oberbegriff des Patentanspruchs 1.

Für Luftfedern für PKW, Fahrerhäuser und Sitze werden im allgemeinen Schlauchrollbälge bevorzugt. Diese Schlauchrollbälge ähneln kurzen Schlauchstücken und sind an ihren Enden ohne Einspannwülste hergestellt. Ihre dichte Befestigung an den Anschlußteilen erfolgt mit im Durchmesser verpreßbaren metallischen Spannringen.

Aus der EP-B-0 110 805 sind eine Vorrichtung und ein Verfahren zum radialen Zusammenpressen eines metallischen Spannringes bekannt, wobei ein ringförmiges, aus Segmenten gebildetes Klemmelement um die aufnehmende Längsachse der Vorrichtung angeordnet ist und eine Reihe von Segmenten aufweist, die radial verschiebbar sind und bei einer entsprechenden von außen einwirkenden Kraft den Spannring in seinem Durchmesser radial plastisch verformen, so daß das vorher aufgesteckte Ende des Schlauchrollbalges auf dem Anschlußteil fest eingespannt wird.

Das radiale Zusammenpressen eines Spannringes hat sich im wesentlichen bewährt. Der Spannring wird durch dieses plastische, radiale Verformen fest auf den aufgeschobenen Schlauchrollbalg aufgebracht.

Ein zu starkes oder zu schwaches Pressen durch den Spannring auf den Endabschnitt des Schlauchrollbalges kann nachteilig sein, da es einerseits zu einer Beschädigung des elastomeren Werkstoffes und der Festigkeitsträgerlage oder andererseits auch zu einer nicht ausreichenden reibschlüssigen Verspannung des Schlauchrollbalges kommen kann. Diese schwankende Befestigungsqualität wird auch aufgrund unterschiedlicher Fertigungstoleranzen von Spannring und/oder Balgwand hervorgerufen.

Der Erfindung liegt die Aufgabe zugrunde, die Einspannung des Endabschnittes eines Schlauchstückes zwischen Anschlußteil und Spannring hinsichtlich ihrer Qualität, d.h. der festen, aber die elastomere Balgwand nicht nachteilig beeinträchtigenden Einspannung, zu erhöhen.

Die Aufgabe wird erfindungsgemäß durch die im Kennzeichen des Anspruchs 1 genannten Merkmale gelöst.

Durch die radiale Spannkraft wird im Elastomer ein Fließvorgang erzeugt, der auch in axialer Richtung auf das Anschlußteil, das immer eine stirnseitige Anlagefläche für das Schlauchstück aufweist, wirkt. Diese beim Einspannvorgang auf das Anschlußteil wirkende Axialkraft kann als ein Maß für den unter dem Spannring herrschenden Druck interpretiert werden. Dadurch kann bewußt ein Über- oder Unterschreiten des unter dem zusammengepreßten Spannring herrschenden Druckes vermieden werden und die Einspannung des Schlauchstückes in der notwendigen Qualität erzeugt werden. Diese Qualität ist bei weiteren Einspannvorgängen reproduzierbar.

In vorteilhafter Ausgestaltung der Erfindung führt das Erreichen eines vorbestimmten Grenzwertes der erfaßten Axialkraft zur Beendigung des radialen Zusammenpressens des Spannringes. Wird ein festgelegter Grenzwert der erfaßten Axialkraft überschritten, kann beispielsweise ein motorischer Antrieb für die radiale Spannkraft abgeschaltet werden.

Die Erfindung betrifft auch eine Vorrichtung zur Durchführung des Verfahrens nach Anspruch 1 mit den im Oberbegriff des Anspruchs 3 genannten Merkmalen. Die Vorrichtung ist durch eine an eine Stirnfläche des Anschlußteiles direkt oder indirekt anlegbare Druckmeßdose gekennzeichnet, deren Ausgang ein elektrisches Signal abgibt, das proportional zur beim Einspannvorgang am Anschlußteil auftretenden Axialkraft ist.

Bei dem Spannvorgang wird durch die radiale Spannkraft über das Elastomer eine Axialkraft auf das Anschlußteil wirksam, das an der Druckmeßdose liegt, die dadurch die Axialkraft als Druckkraft aufnehmen kann. Das proportionale elektrische Ausgangssignal der Druckmeßdose kann nun zur Begrenzung eines motorischen Antriebes der Spannsegmente, z.B. eines hydraulischen Antriebes, benutzt werden. Durch entsprechende Grenzwerteinstellungen kann die Vorrichtung für in ihrer Qualität reproduzierbare Einspannungen benutzt werden.

Eine vorteilhafte Ausgestaltung der Erfindung wird in den Merkmalen des Anspruchs 4 gekennzeichnet. Die stirnseitige, flächige Anlage der Führungsscheibe an dem jeweiligen Anschlußstück ergibt eine gleichbleibend genaue Abnahme der auf das Anschlußteil wirkenden Axialkraft.

In weiterer vorteilhafter Ausgestaltung der Erfindung weist die an dem jeweiligen zu verspannenden Anschlußteil anliegende Stirnfläche der Führungsscheibe eine erhabene Kreisringfläche in der Nähe ihres Außenumfanges auf. Durch diese Ausbildung ist ein Kippen der aneinanderliegenden Flächen von Anschlußteil und Führungsscheibe vermieden, wodurch ein eindeutiges Abnehmen der Axialkraft gewährleistet wird.

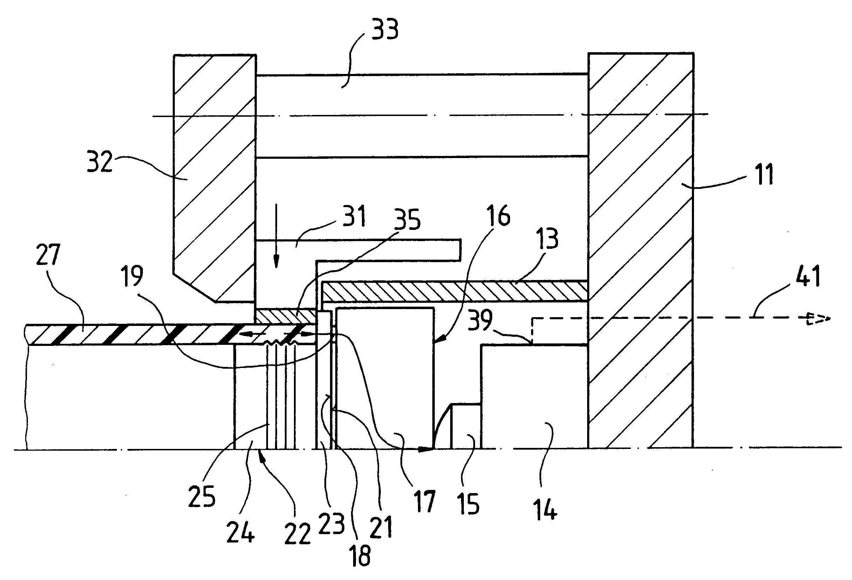

Anhand der Zeichnung wird nachstehend ein schematisches Ausführungsbeispiel der Erfindung näher erläutert.

Eine hier nur ausschnittsweise und im Halbschnitt dargestellte Vorrichtung zur Verspannung von Schlauchrollbälgen an Anschlußteilen weist einen Querträger 11 auf, an dem ein hülsenförmiger Magnethalter 13 angebracht ist. In dem Magnethalter 13 ist auf der selben Mittelachse eine Druckmeßdose 14 angeordnet, die am Gehäuse, in diesem Fall am Querträger 11 befestigt ist. Ein zentrisches Druckglied 15 der Druckmeßdose 14 liegt am Boden 16 einer runden Führungsscheibe 17 an, die relativ zur Druckmeßdose 14 axial verschiebbar ist.

Die entgegengesetzte Stirnfläche 18 der Führungsscheibe 17 weist eine flache, hervorstehende Kreisringfläche 19 auf, an der der Boden 21 eines axial liegenden Anschlußteiles 22, das eine Bordscheibe 23 und einen stutzenförmigen Ansatz 24 aufweist, der mit radialen, dreieckförmigen, umlaufenden Vorsprüngen 25 versehen ist, anliegt.

Auf diesen stutzenförmigen Ansatz 24 ist das eine offene Ende eines elastomeren Schlauchrollbalges 27 gesteckt. Im Bereich des stutzenförmigen Ansatzes 24 sind um den Endabschnitt des Schlauchrollbalges 27 radial verschiebbare Spannsegmente 31 angeordnet, von denen hier nur ein Segment gezeigt ist. Die Spannsegmente 31 sind an einem kreisringförmigen Führungsteil 32 radial verschiebbar angeordnet, das über eine Traverse 33 mit dem Vorrichtungsgehäuse bzw. dem Querträger 11 verbunden ist.

Über dem Endabschnitt des Schlauchrollbalges 27 ist ein bereits im Durchmesser verkleinerter metallischer Spannring 35 angeordnet, auf dessen Außenumfangsfläche die Spannsegmente 31 mit ihren Spannflächen anliegen.

Die axial fluchtende Druckmeßdose 14 weist einen elektrischen Ausgang 39 auf, von dem eine Leitung 41 zu einer hier nicht gezeigten elektronischen Auswerteeinheit führt.

Die Wirkungsweise der vorstehend beschriebenen Vorrichtung ist wie folgt.

Ein Spannring 35 wird an die Stirnseite des Magnethalters 13 gebracht und dort aufgrund der magnetischen Kräfte gehalten. Über den stutzenförmigen Ansatz 24 des Anschlußteiles 22 wird das eine offene Ende des Schlauchrollbalges 27 geschoben, bis es stirnseitig an der Bordscheibe 23 anliegt. Das Anschlußteil 22 wird mit dem aufgeschobenen Schlauchrollbalg 27 axial in die Vorrichtung eingesetzt, bis es mit seinem Boden 21 an der Führungsscheibe 17 flächig anliegt. Die Führungsscheibe 17 liegt ihrerseits in der Mittelachse an dem Druckglied 15 der Druckmeßdose 14 an.

Nun werden die Spannsegmente 31 mit einer Radialkraft aus einem hydraulischen Antrieb beaufschlagt und radial nach innen zusammengefahren. Der metallische Spannring 35 wird radial zusammengepreßt und spannt dabei den Schlauchrollbalg 27 auf dem stutzenförmigen Ansatz 24 des Anschlußteiles 22 ein.

Bei dieser radialen Verspannung entsteht am Anschlußteil 22 eine axial gerichtete Kraft, die als Druckbeaufschlagung von der Druckmeßdose 14 aufgenommen wird. Das proportionale elektrische Ausgangssignal der Druckmeßdose 14 wird in der Auswerteeinheit interpretiert und bewirkt ein Abschalten des die Spannsegmente 31 beaufschlagenden hydraulischen Antriebs, wenn ein vorbestimmter Grenzwert erreicht wird. Ist dieser Grenzwert erreicht, bedeutet das, daß der Spannvorgang zu Ende ist und die Einspannung die erforderliche Qualität aufweist.

### Bezugszeichenliste

- 11: Querträger
- 13: Magnethalter
- 14: Druckmeßdose
- 15: Druckglied
- 16: Boden
- 17: Führungsscheibe
- 18: Stirnfläche
- 19: Kreisringfläche
- 21: Boden
- 22: Anschlußteil
- 23: Bordscheibe
- 24: stutzenförmiger Ansatz
- 25: Vorsprünge
- 27: Schlauchrollbalg
- 31: Spannsegmente
- 32: Führungsteil
- 33: Traverse
- 35: Spannring
- 39: elektrischer Ausgang
- 41: Leitung

## Patentansprüche

1. Verfahren zur dichten Befestigung eines Schlauchstückes aus elastomerem Werkstoff, insbesondere von Schlauchrollbälgen für Luftfedern, an einem Anschlußteil, bei dem man
1) ein offenes Ende des Schlauchstückes auf das Anschlußteil aufschiebt,
2) einen metallischen Spannring das Schlauchstück umfassend in dessen aufgeschobenen Endbereich positioniert,
3) den Durchmesser des Spannringes durch radiales Zusammenpressen verkleinert und dadurch das Schlauchstück auf dem Anschlußteil dicht festspannt,
**dadurch gekennzeichnet,**
daß während des radialen Zusammenpressens des Spannringes die beim radialen Einspannvorgang des Schlauchstückes am Anschlußteil auftretende Axialkraft erfaßt wird.

2. Verfahren nach Anspruch 1, dadurch gekennzeichnet, daß ein vorbestimmter Grenzwert der erfaßten Axialkraft zur Beendigung des radialen Zusammenpressens des Spannringes führt.

3. Vorrichtung zur Durchführung des Verfahrens nach Anspruch 1, mit folgenden Merkmalen:
a) um eine Längsachse sind in einer radialen Ebene radial verschiebbare, kraftbeaufschlagbare Spannsegmente (31) ringförmig angeordnet,
b) die Spannsegmente (31) sind geführt angeordnet und bilden mit ihren zueinander gerichteten Spannflächen im zusammengefahrenen Zustand eine kreisförmige Öffnung,
c) ein eine Radialkraft auf die Spannsegmente (31) ausübende Antriebseinrichtung,
d) eine axiale Aufnahmeeinrichtung für das mit dem Schlauch zu verbindende Anschlußteil (22),
**gekennzeichnet durch folgendes Merkmal:**
e) die Vorrichtung weist eine an einem Boden (21) des Anschlußteiles (22) direkt oder indirekt anlegbare Druckmeßdose (14) auf, deren Ausgang (39) ein elektrisches Signal abgibt, das proportional zur beim Einspannvorgang am Anschlußteil (22) auftretenden Axialkraft ist.

4. Vorrichtung nach Anspruch 3, gekennzeichnet durch folgende Merkmale:
f) zwischen der Druckmeßdose (14) und dem zu montierenden Anschlußteil (22) ist eine an dem jeweiligen Anschlußteil (22) flächig anliegende Führungsscheibe (17) angeordnet,
g) die Führungsscheibe (17) ist schwimmend an der Druckmeßdose (14) befestigt und relativ zur Druckmeßdose (14) axial beweglich.

5. Vorrichtung nach Anspruch 4, gekennzeichnet durch folgendes Merkmal:
h) die an dem jeweiligen zu verspannenden Anschlußteil (22) anliegende Stirnfläche (18) der Führungsscheibe (17) weist eine erhabene Kreisringfläche (19) in der Nähe ihres Außenumfanges auf.

## Claims

1. Method for the sealed securement of a piece of hose formed from elastomeric material, more especially tubular roller bellows for air springs, on a connector, wherein
1) an open end of the piece of hose is slipped over the connector,
2) a metallic clamping ring is positioned in the slipped-over end region of the piece of hose so as to surround the latter, and
3) the diameter of the clamping ring is reduced by radial compression, and the piece of hose is thereby clamped tightly on the connector,
characterised in that the axial force, which occurs during the process for radially clamping the piece of hose in position on the connector, is detected during the radial compression of the clamping ring.

2. Method according to claim 1, characterised in that a predetermined limit value of the detected axial force leads to the termination of the radial compression of the clamping ring.

3. Apparatus for accomplishing the method according to claim 1, having the following features:
a) loadable clamping segments (31), which are radially displaceable in a radial plane, are disposed in an annular manner about a longitudinal axis,
b) the clamping segments (31) are disposed in a guided manner and form, with their clamping faces facing one another, a circular aperture in the retracted state,
c) a drive means which exerts a radial force upon the clamping segments (31),
d) an axial receiving means for receiving the connector (22), which is to be connected to the hose, characterised by the following feature:
e) the apparatus includes a pressure measuring box (14), which can be laid directly or indirectly on a base (21) of the connector (22), the output (39) of said box releasing an electrical signal which is proportional to the axial force occurring at the connector (22) during the clamping process.

4. Apparatus according to claim 3, characterised by the following features:
f) a guide disc (17), which abuts surface-to-surface against the actual connector (22), is disposed between the pressure measuring box (14) and the connector (22) to be mounted,
g) the guide disc (17) is detachably mounted on the pressure measuring box (14) and axially displaceable relative to the pressure measuring box (14).

5. Appartus according to claim 4, characterised by the following feature:
h) the end face (18) of the guide disc (17), abutting against the actual connector (22) to be clamped, has a raised circular ring face (19) in the vicinity of its external circumference.

## Revendications

1. Procédé de fixation hermétique d'un troncon de tuyau souple en matériau élastomère, en particulier de soufflets tubulaires à mouvement de roulement pour ressorts pneumatiques, sur un élément de raccord, suivant lequel
1) on enfile une extrémité ouverte du tronçon de tuyau sur l'élément de raccord,
2) on positionne un anneau métallique de serrage de manière qu'il entoure le tronçon de tuyau sur la zone enfilée d'extrêmité de ce dernier,
3) on réduit le diamètre de l'anneau de serrage par compression radiale et on fixe ainsi hermétiquement le tronçon de tuyau sur l'élément de raccord,
caractérisé en ce que
on détecte, pendant la compression radiale de l'anneau de serrage, la force axiale produite sur l'élément de raccord par le processus de serrage radial du tronçon de tuyau.

2. Procédé selon la revendication 1, caractérisé en ce qu'un seuil prédéterminé de la force axiale détectée déclenche l'achèvement de la compression radiale de l'anneau de serrage.

3. Dispositif pour la mise en oeuvre du procédé selon la revendication 1, ayant les particularités suivantes :
a) des segments de serrage (31) déplaçables radialement dans un plan radial et pouvant être soumis à une force sont disposés en anneau autour d'un axe longitudinal,
b) les segments de serrage (31) sont disposés de manière à être guidés et forment une ouverture circulaire par leurs surfaces de serrage orientées les unes vers les autres lorsqu'ils sont à l'état d'appui les uns contre les autres,
c) un dispositif générateur de pression exerçant une force radiale sur les segments de serrage (31),
d) un système de support axial de l'élément de raccord (22) devant être relié au tuyau souple,
caractérisé par les particularités suivantes :
e) le dispositif comprend une boîte dynamométrique (14) qui est destinée à être placée directement ou indirectement contre un fond (21) de l'élément de raccord (22) et dont la sortie (39) émet un signal électrique qui est proportionnel à la force axiale produite sur l'élément de raccord (22) lors du processus de serrage.

4. Dispositif selon la revendication 3, caractérisé par les particularités suivantes :
f) un disque de guidage (17) prenant appui à plat contre l'élément particulier de raccord (22) est disposé entre la boîte dynamométrique (14) et l'élément de raccord devant être monté (22),
g) le disque de guidage (17) est fixé de manière flottante à la boîte dynamométrique (14) et mobile axialement par rapport à la boîte dynamométrique (14).

5. Dispositif selon la revendication 4, caractérisé par la particularité suivante :
h) la surface frontale (18) du disque de guidage (17) qui est en appui contre l'élément particulier de raccord devant être fixé (22) comporte une surface annulaire en relief (19) à proximité de sa circonférence extérieure.
